# FASCICULE DE BREVET EUROPEEN

(11) **EP 2 859 651 B1**
(45) Date de publication et mention de la délivrance du brevet: **27.12.2017**
(21) Numéro de dépôt: 13734462.8
(22) Date de dépôt: 06.06.2013
(51) Int. Cl.: H02M 1/15, H02J 1/02

(54) **CIRCUIT D'ABSORPTION D'UNE ONDULATION DE PUISSANCE ET PROCÉDÉ ASSOCIÉ**
ABSORPTIONSSCHALTUNG ZUR ABSORPTION EINER STROMWELLE UND ZUGEHÖRIGES VERFAHREN
ABSORPTION CIRCUIT FOR ABSORBING A POWER RIPPLE AND ASSOCIATED METHOD

(30) Priorité: 06.06.2012 FR 1255280
(43) Date de publication de la demande: 15.04.2015
(73) Titulaire: Valeo Systèmes De Contrôle Moteur, 95892 Cergy Saint Christophe (FR)
(72) Inventeur: DE SOUSA, Luis, 95670 Eragny Sur Oise (FR)
(74) Mandataire: Argyma
(86) Numéro de dépôt international: PCT/FR2013/051287
(87) Numéro de publication internationale: WO 2013/182813

(56) Documents cités:
- WO-A1-02/05412
- FR-A1- 2 938 711
- ZHONG CHEN ET AL: "Low frequency ripple current compensation with DC active filter for the single-phase aeronautic static inverter", ENERGY CONVERSION CONGRESS AND EXPOSITION (ECCE), 2011 IEEE, IEEE, 17 septembre 2011 (2011-09-17), pages 1468-1475, XP032067348, DOI: 10.1109/ECCE.2011.6063954 ISBN: 978-1-4577-0542-7
- KUN XING ET AL: "An active bus conditioner for a distributed power system", POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, vol. 2, 27 juin 1999 (1999-06-27), pages 895-900, XP010346797, ISBN: 978-0-7803-5421-0
- KUANG LI ET AL: "Comparison of four control methods to active power filters applied in accelerator power supplies", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 juin 2004 (2004-06-20), pages 794-799Vol.1, XP010738087, DOI: 10.1109/PESC.2004.1355850 ISBN: 978-0-7803-8399-9

## Description

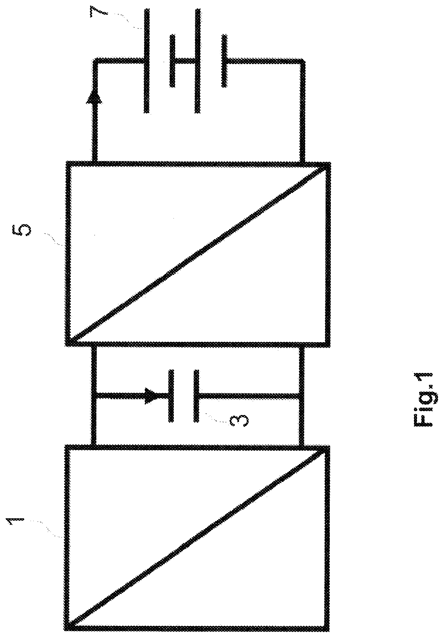

Les modes de réalisation de la présente invention concernent les équipements électriques comprenant un correcteur du facteur de puissance (« power factor corrector (PFC) » en anglais) et plus particulièrement les convertisseurs de tension destinés à recharger des moyens d'accumulation à partir d'un réseau électrique. Le facteur de puissance correspond au déphasage existant entre le courant et la tension délivrée par le réseau électrique. Ainsi, le rôle d'un correcteur du facteur de puissance est d'absorber un courant en phase avec la tension du réseau électrique pour minimiser la puissance réactive et maximiser la puissance active. Le correcteur du facteur de puissance agit donc comme un convertisseur alternatif-continu. Cependant, la puissance en sortie du correcteur du facteur de puissance n'est pas purement continue mais comprend une composante sinusoïdale. Or, si l'on veut recharger des moyens d'accumulation comme par exemple une batterie, cette composante sinusoïdale doit être supprimée afin d'assurer un chargement correct de la batterie et d'éviter une usure prématurée de cette dernière. Ainsi, comme représenté sur la figure 1, un condensateur 3 est ajouté à la sortie du correcteur du facteur de puissance 1 pour faire tampon et un convertisseur de tension DC/DC est rajouté pour gommer les variations de tension (et/ou de courant). Le convertisseur DC/DC 5 est aussi utilisé en sortie du condensateur 3 pour adapter la valeur de tension à la tension admissible par la batterie 7. Cependant, la valeur du condensateur 3 est généralement très importante (plusieurs milliers de µF) pour réduire suffisamment l'ondulation de tension à 100 ou 120Hz et supporter la valeur du courant efficace. En effet, la puissance consommée sur le réseau électrique est pulsée à 100Hz pour un réseau 50Hz et à 120Hz pour un réseau 60Hz. De plus, ces fortes valeurs de condensateur imposent généralement l'utilisation de condensateurs chimiques du fait de leur grande densité énergétique. Ces condensateurs chimiques ont des faibles durées de vie. L'article publié par IEEE "Low frequency ripple current compensation with DC active filter for the single-phase aeronautic static inverter" (XP032067348) divulgue un circuit d'absorption d'une ondulation de puissance destiné à être connecté en parallèle d'un équipement électrique, le circuit d'absorption étant de type abaisseur de tension et comprenant un condensateur monté en série avec une inductance et un interrupteur, un module de contrôle, et des moyens de mesure d'un premier courant. L'interrupteur est piloté par le module de contrôle pour faire varier la charge du condensateur en fonction de l'ondulation du premier courant afin d'atténuer l'ondulation de puissance. Le circuit comprend en outre des moyens de mesure de la tension aux bornes du condensateur, et le module de contrôle est configuré pour asservir un second courant traversant le condensateur de manière à ce que la tension aux bornes du condensateur reste dans un intervalle prédéfini. Le courant parcourant le condensateur n'est pas limité en fonction des valeurs de la tension aux bornes du condensateur. Afin de surmonter au moins partiellement les inconvénients précités de l'état de la technique et proposer une solution permettant d'obtenir une puissance continue en sortie d'un correcteur du facteur de puissance sans nécessiter l'utilisation de très gros condensateurs.

Ainsi, les modes de réalisation de la présente invention concernent un circuit d'absorption d'une ondulation de puissance, comme défini dans a revendication 1, destiné à être connecté en parallèle d'un équipement électrique alimenté par un circuit de correction du facteur de puissance ledit circuit d'absorption étant de type abaisseur de tension et comprenant un condensateur monté en série avec une inductance, au moins un interrupteur, un module de contrôle, et des moyens de mesure d'un premier courant destinés à alimenter ledit équipement électrique, l'interrupteur étant piloté par le module de contrôle pour faire varier la charge du condensateur en fonction de l'ondulation du premier courant afin d'atténuer l'ondulation de puissance. En outre, le circuit d'absorption comprend des moyens de mesure de la tension aux bornes du condensateur, et le module de contrôle comprend également une troisième boucle d'asservissement configurée de manière à ce que la tension aux bornes du condensateur reste dans un intervalle prédéfini. Selon un mode de réalisation, le circuit d'absorption comprend également des moyens de mesure d'un second courant traversant le condensateur et le module de contrôle comprend une première boucle d'asservissement configurée pour asservir la valeur du second courant traversant le condensateur à une première valeur de référence, une deuxième boucle d'asservissement étant configurée pour asservir la première valeur de référence en fonction du premier courant alimentant ledit équipement électrique.

Selon un mode de réalisation, la deuxième boucle d'asservissement comprend un filtre passe-bande afin de filtrer la composante continue et les fréquences liées au bruit dans le premier courant alimentant ledit équipement électrique, et des moyens pour soustraire la sortie du filtre passe-bande à une seconde valeur de référence pour établir la première valeur de référence.

Selon un mode de réalisation, la tension aux bornes du condensateur est régulée en modifiant la seconde valeur de référence au niveau de la troisième boucle d'asservissement.

Selon un mode de réalisation, le circuit d'absorption comprend une branche ayant au moins un interrupteur piloté par le module de contrôle et connecté à une extrémité du condensateur et de l'inductance montés en série.

Selon un mode de réalisation, le circuit d'absorption comprend deux branches connectées de part et d'autre du condensateur et de l'inductance montés en série, lesdites deux branches comprenant des interrupteurs connectés en série et étant destinées à être montées en parallèle de l'équipement électrique, les interrupteurs étant pilotés par le module de contrôle pour faire varier la charge du condensateur en fonction de l'ondulation du premier courant afin d'atténuer l'ondulation de puissance.

L'invention concerne en outre un convertisseur de tension alternative en tension continue destiné à alimenter un équipement électrique comprenant un circuit de correction du facteur de puissance connecté à un circuit d'absorption selon l'invention.

Selon un mode de réalisation du convertisseur de tension, le circuit de correction du facteur de puissance est réalisé par un onduleur, ledit onduleur comprenant des bobines constituant des phases d'un moteur électrique, ledit onduleur comprenant en outre des moyens de commutation associés à chacune desdites phases. En outre, lors de l'alimentation de l'équipement électrique à partir d'un réseau électrique monophasé, une première et une deuxième phases du moteur électrique sont destinées à être connectées au réseau électrique, une troisième phase du moteur électrique et les moyens de commutation associés à la troisième phase constituant respectivement l'inductance et l'interrupteur du circuit d'absorption, et lesdits moyens de commutation étant pilotés par le module de contrôle du circuit d'absorption pour faire varier la charge du condensateur en fonction de l'ondulation du premier courant afin d'atténuer l'ondulation de puissance.

L'invention concerne également une utilisation d'un convertisseur de tension selon l'invention en tant que chargeur de moyens d'accumulation. Comme défini dans la revendication 11, l'invention concerne aussi un procédé d'absorption d'une ondulation de puissance délivrée par un circuit de correction du facteur de puissance à un équipement électrique, un circuit comprenant un condensateur monté en série avec une inductance et au moins un interrupteur étant connecté en parallèle de l'équipement électrique. Le procédé comprend :
- la mesure d'un premier courant délivré audit équipement électrique par le circuit de correction du facteur de puissance ;
- le pilotage de l'interrupteur pour faire varier la charge du condensateur en fonction de l'ondulation du premier courant afin d'atténuer l'ondulation de puissance.
En outre, le procédé comprend : la mesure de la tension aux bornes du condensateur, et l'asservissement de la tension aux bornes du condensateur de sorte qu'elle reste dans un intervalle prédéfini. Selon un mode de réalisation du procédé, le premier courant correspond à la partie continue d'un courant délivré par le circuit de correction du facteur de puissance.

Selon un mode de réalisation, le procédé comprend :
- également la mesure d'un second courant traversant le condensateur ;
- l'asservissement de la valeur du second courant traversant le condensateur à une première valeur de référence ; et
- l'asservissement de la première valeur de référence en fonction du premier courant alimentant ledit équipement électrique.

Selon un mode de réalisation, le circuit de correction du facteur de puissance est branché en entrée sur un réseau d'alimentation triphasé.

Selon un mode de réalisation, le circuit de correction du facteur de puissance est branché en entrée sur un réseau d'alimentation monophasé.

Selon un mode de réalisation, l'équipement électrique consiste en des moyens des moyens d'accumulation.

L'invention concerne encore un circuit d'absorption d'une ondulation de puissance destiné à être connecté en parallèle d'un équipement électrique alimenté par un circuit de correction du facteur de puissance, ledit circuit d'absorption étant de type abaisseur de tension et comprenant :
- un condensateur monté en série avec une inductance et au moins un interrupteur,
- un module de contrôle,
- des moyens de mesure d'un premier courant destiné à alimenter ledit équipement électrique
l'interrupteur étant piloté par le module de contrôle pour faire varier la charge du condensateur en fonction de l'ondulation du premier courant afin d'atténuer l'ondulation de puissance, et
ledit circuit comprenant en outre des moyens de mesure de la tension aux bornes du condensateur, et le module de contrôle étant configuré pour asservir un second courant traversant le condensateur de manière à ce que la tension aux bornes du condensateur reste dans un intervalle prédéfini.

Ce circuit peut comprendre l'une quelconque des caractéristiques décrites précédemment.

En particulier, selon un mode de réalisation, le module de contrôle comprend une boucle d'asservissement du courant traversant le condensateur configurée pour recevoir une consigne de courant, ladite consigne étant déterminée en fonction de la différence entre la tension aux bornes du condensateur et une valeur donnée de tension de façon à réguler la composante continue de la tension du condensateur à ladite valeur.

Selon un mode de réalisation, le module de contrôle comprend au moins une unité de limitation configurée pour limiter le courant parcourant le condensateur de sorte que la tension aux bornes du condensateur reste inférieure au égale à une valeur maximale et/ou supérieure ou égale à une valeur minimale.

Selon un mode de réalisation, le module de contrôle comprend :
- une première boucle d'asservissement configurée pour asservir la valeur du second courant traversant le condensateur à une première valeur de référence, et
- une deuxième boucle d'asservissement configurée pour asservir la première valeur de référence en fonction du premier courant alimentant ledit équipement électrique.

Selon un mode de réalisation, la deuxième boucle d'asservissement comprend un filtre passe-bande afin de filtrer la composante continue et les fréquences liées au bruit dans le premier courant alimentant ledit équipement électrique.

Selon un mode de réalisation, la deuxième boucle d'asservissement comprend en outre des moyens pour soustraire la sortie du filtre passe-bande à la consigne pour établir la première valeur de référence.

L'invention concerne aussi un procédé d'absorption d'une ondulation de puissance délivrée par un circuit de correction du facteur de puissance à un équipement électrique, le procédé comprenant :
- la connexion d'un circuit comprenant un condensateur monté en série avec une inductance et au moins un interrupteur en parallèle de l'équipement électrique,
- la mesure d'un premier courant délivré audit équipement électrique par le circuit de correction du facteur de puissance,
- le pilotage de l'interrupteur pour faire varier la charge du condensateur en fonction de l'ondulation du premier courant afin d'atténuer l'ondulation de puissance,
- la mesure de la tension aux bornes du condensateur, et l'asservissement d'un second courant traversant le condensateur de manière à ce que la tension aux bornes du condensateur reste dans un intervalle prédéfini.

Ce procédé peut comprendre l'une quelconque des caractéristiques décrites précédemment.

En particulier, selon un mode de réalisation, le procédé comprend :
- la détermination d'une consigne de courant en fonction de la différence entre la tension aux bornes du condensateur et une valeur donnée de tension,
- l'asservissement du courant traversant le condensateur de tension, comprenant la réception de ladite consigne, de façon à réguler la composante continue de la tension du condensateur à ladite valeur.

Selon un mode de réalisation, le procédé comprend la limitation du courant parcourant le condensateur de sorte que la tension aux bornes du condensateur reste inférieure au égale à une valeur maximale et/ou supérieure ou égale à une valeur minimale.

Selon un mode de réalisation, le procédé comprend :
- la mesure du second courant traversant le condensateur,
- un premier asservissement de la valeur du second courant traversant le condensateur à une première valeur de référence, et
- un second asservissement de la première valeur de référence en fonction du premier courant (I₃) alimentant ledit équipement électrique.

Selon un mode de réalisation, le deuxième asservissement comprend un filtrage par un filtre passe-bande de la composante continue et des fréquences liées au bruit dans le premier courant alimentant ledit équipement électrique.

Selon un mode de réalisation, le second asservissement comprend en outre la soustraction de la sortie du filtre passe-bande à la consigne pour établir la première valeur de référence.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma électrique d'un chargeur de batterie selon l'état de la technique ;
- la figure 2 représente un schéma électrique d'un chargeur de batterie selon un mode de réalisation de la présente invention ;
- la figure 3 représente un schéma électrique d'un circuit d'absorption d'une ondulation de puissance selon un mode de réalisation de la présente invention ;
- la figure 4 représente un schéma électrique d'un circuit d'absorption d'une ondulation de puissance selon un autre mode de réalisation de la présente invention ;
- la figure 5a représente une première boucle d'asservissement ;
- la figure 5b représente la première boucle d'asservissement imbriquée avec une seconde boucle d'asservissement ;
- la figure 6 représente un schéma électrique d'un circuit de génération d'un courant de référence ;
- la figure 7 représente un schéma électrique d'un circuit d'absorption d'une ondulation de puissance dont les interrupteurs sont pilotés par un module de contrôle à hystérésis ;
- la figure 8 représente un schéma électrique d'un convertisseur de tension selon un mode de réalisation de la présente invention branché sur un réseau triphasé ;
- la figure 9 représente un schéma électrique d'un convertisseur de tension comprenant un onduleur dont l'un des ponts est utilisé pour former un circuit d'absorption d'une ondulation de puissance selon un mode de réalisation de la présente invention.

Sur toutes les figures, les éléments identiques portent les mêmes numéros de référence.

Dans la description qui va suivre, on désigne de façon générale:
Le terme « metal-oxyde semiconductor field effect transistor (MOSFET) » correspond à un transistor à effet de champ à grille métal-oxyde ;

Le terme «transistor bipolaire à grille isolée « insulated gate bipolar transistor (IGBT) » en anglais » est un transistor bipolaire à grille isolée et correspond à un transistor hybride, regroupant un transistor à effet de champ à grille métal-oxyde (« metal-oxyde semiconductor field effect transistor (MOSFET) » en anglais) en entrée et un transistor bipolaire en sortie.

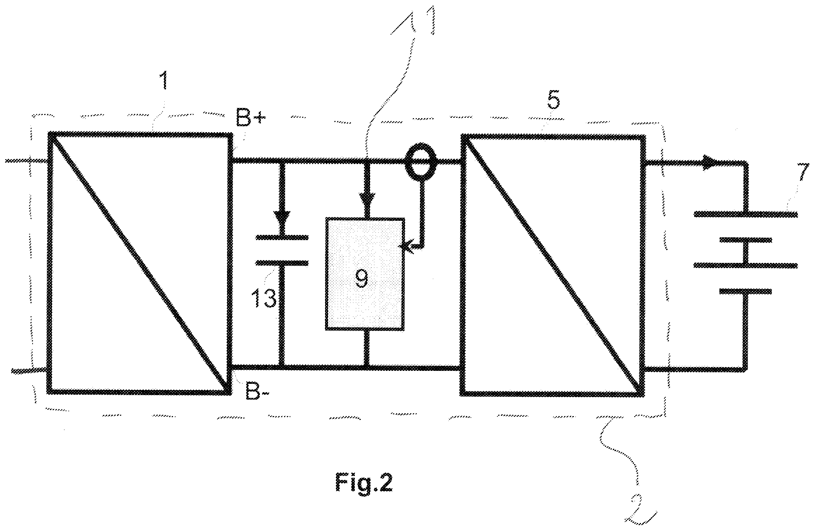

Les modes de réalisation de la présente invention concernent l'utilisation d'un circuit d'absorption d'une ondulation de puissance en sortie d'un correcteur de facteur de puissance. La figure 2 représente un exemple d'implantation d'un tel circuit 9 d'absorption d'une ondulation de puissance dans un chargeur 2 d'une batterie 7. Le chargeur 2 comprend un correcteur du facteur de puissance 1 branché sur un réseau électrique. Le correcteur 1 comprend deux bornes de sortie notés B+ et B-, une borne de sortie haute B+ et une borne de sortie basse B- correspondant généralement à la masse. Le circuit d'absorption d'une ondulation de puissance 9 est branché entre la borne de sortie haute B+ et la borne de sortie basse B- du correcteur du facteur de puissance 1. Par ailleurs, un condensateur 13 est également branché entre les deux bornes du correcteur du facteur de puissance 1. Ce condensateur 13 est utilisé pour résoudre les problèmes de couplage, par exemple pour éviter les problèmes de surtension lors de la fermeture des interrupteurs des différents équipements électriques (correcteur du facteur de puissance 1 ou circuit d'absorption 9) et sa valeur est relativement faible, de l'ordre de 100µF. Cependant, on pourrait se passer de ce condensateur 13. Le circuit d'absorption d'une ondulation de puissance 9 est un circuit de type abaisseur ou dévolteur (« Buck » en anglais) comprenant un condensateur monté en série avec une inductance et au moins un interrupteur qui permet de réguler le courant circulant au niveau du condensateur. Le chargeur 2 comprend un noeud électrique 11 auquel sont reliées trois branches. La première branche est reliée à la borne de sortie haute B+ du correcteur du facteur de puissance 1. La deuxième branche est reliée au circuit d'absorption 9. La troisième branche est reliée à un équipement électrique que l'on veut alimenter par une puissance continue.

Par ailleurs, afin d'adapter la tension délivrée entre la borne de sortie haute B+ et la borne de sortie basse B- à la tension admissible par les moyens d'accumulation 7, généralement une batterie, on utilise un convertisseur de tension continue 5. Cependant, si cette tension admissible par les moyens d'accumulation est supérieure à la tension délivrée entre les bornes B+ et B-, on peut alors se passer du convertisseur de tension continue 5 et brancher la batterie directement à la sortie du circuit d'absorption 9.

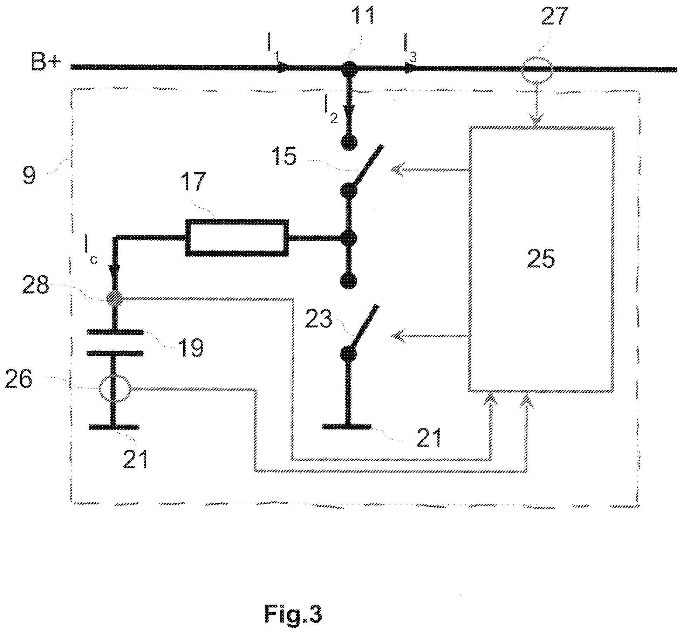

La figure 3 représente un exemple d'un mode de réalisation du circuit d'absorption d'une ondulation de puissance 9. Le circuit 9 est un circuit à demi-pont. Le circuit d'absorption 9 comprend un premier interrupteur 15 relié d'une part au noeud électrique 11 et d'autre part à une première borne de l'inductance 17. La deuxième borne de l'inductance 17 est reliée à la première borne du condensateur 19 dont la deuxième borne est reliée à la borne de sortie basse B- du correcteur du facteur de puissance 1, c'est à dire à la masse 21. Le circuit d'absorption 9 comprend également un deuxième interrupteur 23 relié d'une part à la première borne de l'inductance 17 et d'autre part à la masse 21. En fonctionnement, l'ouverture et la fermeture des interrupteurs 15 et 23 sont synchronisées et opposées de sorte que lorsque l'un est ouvert, l'autre est fermé. Ainsi les deux interrupteurs 15 et 23 peuvent être remplacés par un unique interrupteur correspondant au premier interrupteur 15 pour lequel la position ouverte correspondrait à une position reliée à la masse.

Les interrupteurs sont réalisés, par exemple, par l'association d'un transistor de type IGBT ou MOSFET en parallèle avec une diode.

Les interrupteurs 15 et 23 sont pilotés par un module de contrôle 25 des moyens 27 qui mesurent un premier courant ou courant résultant sur la troisième branche du noeud électrique 11 noté I₃. Le module de contrôle 25 asservit la position des interrupteurs 15 et 23 en fonction de l'intensité du courant résultant I₃ mesuré. En effet au niveau du noeud électrique 11, la somme des courants entrants est égale à la somme des courants sortants de sorte que le courant résultant I₃ est égal à la différence entre le courant I₁ fourni par la borne de sortie haute B+ du correcteur du facteur de puissance 1 et le courant I₂ traversant la deuxième branche (I₁=I₂+I₃). Ainsi, en pilotant les interrupteurs 15 et 23 on peut moduler le courant I₂ et donc le courant résultant I₃. L'idée est donc de piloter les interrupteurs 15 et 23 de manière à ce que I₃ corresponde à la partie continue de I₁.

Par ailleurs, d'autres contraintes sont à prendre en compte au niveau du circuit d'absorption 9. En effet, la tension aux bornes du condensateur 19 doit rester inférieure à sa tension de claquage et supérieure à 0V (dans le cas d'un montage à demi-pont présenté dans ce qui suit). Ainsi, afin de contrôler le fonctionnement du condensateur 19, le module de contrôle 25 comprend également des moyens de mesure 26 du courant I_{c} traversant le condensateur 19 et des moyens de mesure 28 de la tension V_{c} aux bornes du condensateur 19. Le pilotage des interrupteurs 15 et 23 est donc également modulé en fonction de la valeur du courant I_{c} et de la tension V_{c} aux bornes du condensateur 19.

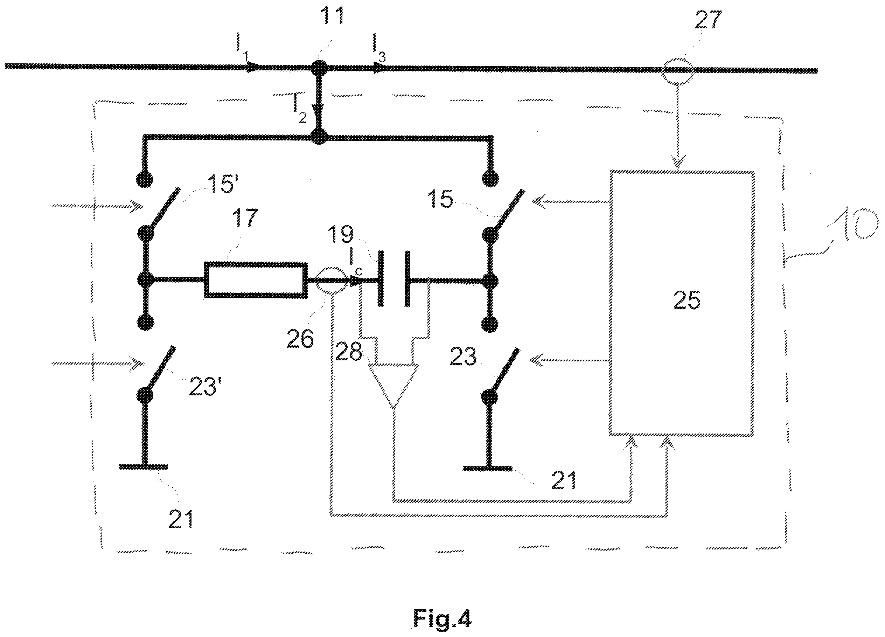

Augmenter l'étendue de la plage de tension aux bornes du condensateur 19 permet d'améliorer l'efficacité de stockage au niveau du condensateur 19, et ainsi réduire la valeur de ce condensateur 19. A cet effet, on peut utiliser un circuit d'absorption 10 en pont complet dont la figure 4 représente un exemple de réalisation. Le circuit 10 comprend deux branches parallèles symétriques comprenant chacune un premier interrupteur 15, 15' relié au noeud électrique 11 d'une part et à un deuxième interrupteur 23, 23' d'autre part, le deuxième interrupteur 23, 23' étant relié à la masse 21 à son autre extrémité. Les deux interrupteurs de chacune des branches parallèles fonctionnent de manière synchronisée et opposée, les quatre interrupteurs étant pilotés par le module de contrôle 25. Le circuit 10 comprend également une branche reliée à chaque extrémité de la borne commune des deux interrupteurs 15, 15', 23, 23'. Cette branche comprend un condensateur 19 en série avec une inductance 17.

Par ailleurs, comme pour le circuit en demi-pont 9, les deux interrupteurs 15, 15', 23, 23'de chaque branche parallèle peuvent être remplacés par un seul interrupteur relié dans une première position au noeud électrique 11 et dans une deuxième position à la masse 21.

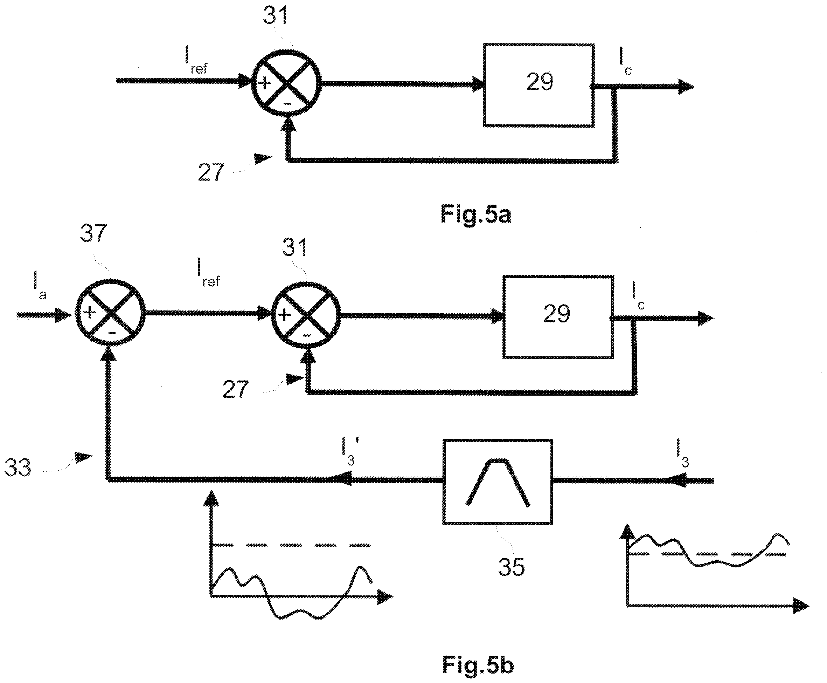

Le fonctionnement du circuit d'absorption d'une ondulation de fréquence 9, 10 va maintenant être décrit en détail à partir des schémas des figures 5a et 5b. Le module de contrôle 25 comprend une première boucle d'asservissement 27 représentée sur la figure 5a qui permet de réguler le courant I_{c} traversant le condensateur 19 à une première valeur de référence I_{ref}. Un module de commande 29 des interrupteurs du circuit d'absorption 9, 10 est asservi par la sortie d'un soustracteur 31 dont les entrées sont la première valeur de référence I_{ref} et le courant I_{c} du condensateur 19 de sorte que I_{c} est régulé à la première valeur de référence I_{ref}.

La figure 5b représente la première boucle d'asservissement 27 imbriquée avec une seconde boucle d'asservissement 33. La deuxième boucle 33 modifie la première valeur de référence I_{ref} en fonction des variations du courant résultant I₃. Afin de moduler la première valeur de référence I_{ref} seulement en fonction de la partie sinusoïdale du courant résultant I₃, on applique un filtre passe-bande 35 au courant I₃ qui permet de supprimer la partie continue ainsi que les hautes fréquences correspondant au bruit. Le courant I₃' obtenu à la sortie du filtre passe-bande 35 est transmis à un soustracteur 37 dont l'autre entrée reçoit une deuxième valeur de référence Iₐ correspondant à une consigne. La sortie du soustracteur 37 correspond à la première valeur de référence I_{ref}. Ainsi, la valeur de référence I_{ref} est modulée seulement en fonction des variations de la partie sinusoïdale du courant résultant I₃, qui est la partie que l'on souhaite supprimer.

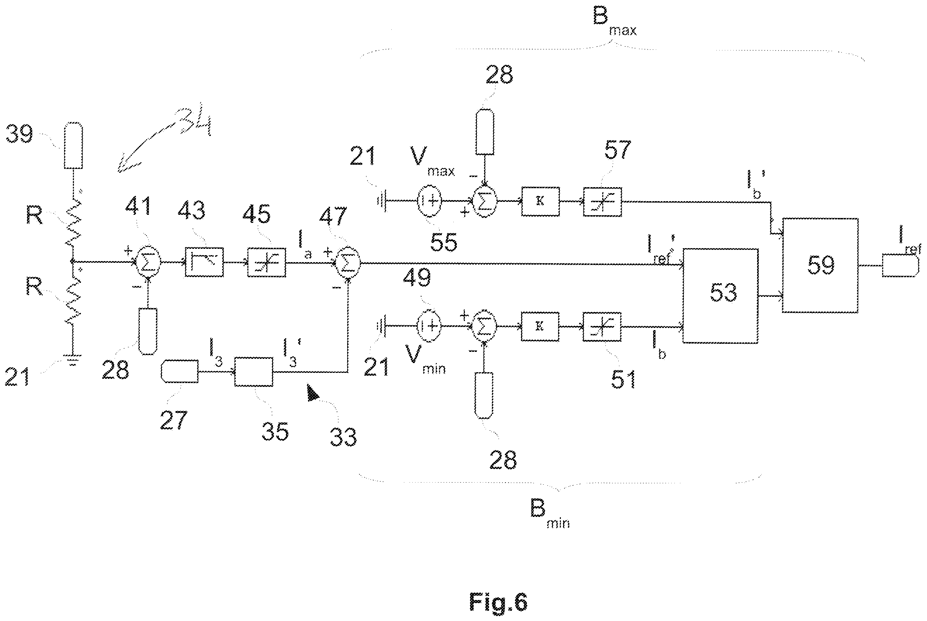

La figure 6 représente un exemple de réalisation d'un circuit permettant d'obtenir la première valeur de référence I_{ref}. Le circuit comprend un exemple de réalisation de la deuxième boucle d'asservissement 33 qui comprend un soustracteur 47 et un filtre 35. Le filtre 35 extrait la partie sinusoïdale I₃' du courant résultant I₃. Au soustracteur 47, on soustrait à la seconde valeur de référence Iₐ la partie sinusoïdale I₃' pour obtenir la première valeur de référence I_{ref} à laquelle on veut asservir le courant I_{c} traversant le condensateur 19.

Afin de maintenir la tension aux bornes du condensateur 19 dans une plage admissible, on asservit également la seconde valeur de référence Iₐ en fonction de la tension V_{c} aux bornes du condensateur 19. On régule la tension V_{c} du condensateur 19 à une valeur acceptable, par exemple la moitié de la tension de la batterie dans le cas où l'on recharge une batterie.

Le circuit en figure 6 comprend un exemple d'unité 34 pour asservir la seconde valeur de référence Iₐ. L'unité 34 comprend des moyens de mesure 39 de la tension de la batterie 7 notée V_{bat} (dans le cas où l'on utilise une tension de référence correspondant à la moitié de la tension de la batterie 7) et deux résistances notées R montées en pont diviseur de tension pour récupérer une tension V_{bat}/2 égale à la moitié de la tension V_{bat} de la batterie 7. Un soustracteur 41 établit la différence entre cette tension V_{bat}/2 et la tension V_{c} aux bornes du condensateur 19 fournie par les moyens de mesure 28. Cette différence (V_{bat}/2-V_{c}) est filtrée par un filtre passe-bas 43 pour supprimer les hautes fréquences correspondant au bruit. Afin d'éviter la saturation en sortie du filtre passe-bas, on applique des bornes haute et basse par un filtre 45. On obtient alors la seconde valeur de référence Iₐ à appliquer au condensateur 19 pour obtenir la valeur de tension V_{bat}/2 aux bornes du condensateur 19.

Cependant, pour éviter toute divergence de cette tension durant les phénomènes transitoires (afin notamment d'éviter le claquage du condensateur 19), on limite la seconde valeur de référence I_{ref}. Lorsque la tension V_{c} du condensateur atteint un seuil minimal Vₘᵢₙ ou un seuil maximal Vₘₐₓ le circuit 9, 10 change d'état. Ces seuils Vₘᵢₙ, Vₘₐₓ sont des seuils prédéterminés, par exemple 100V et 600V dans le cas d'un circuit à demi-pont. Ainsi, lorsque le seuil minimal Vₘᵢₙ est atteint, les interrupteurs du circuit 9, 10 sont pilotés pour remonter la tension V_{c} du condensateur 19 et lorsque le seuil maximal Vₘₐₓ est atteint, les interrupteurs du circuit 9, 10 sont pilotés pour abaisser la tension V_{c} du condensateur 9, 10 quelles que soit les variations du courant résultant I₃.

Le circuit en figure 6 comprend également des unités Bₘᵢₙ et Bₘₐₓ pour une telle limitation. Pour garder la tension V_{c} du condensateur 19 dans un intervalle prédéterminé, on limite la valeur I_{ref} obtenue à la sortie du soustracteur 47 de la deuxième boucle d'asservissement 33 grâce aux deux unités Bₘᵢₙ et Bₘₐₓ définissant respectivement le seuil minimum Vₘᵢₙ et le seuil maximum Vₘₐₓ de tension acceptable pour la tension V_{c}.

Dans la première unité Bₘᵢₙ on fait la différence, à l'aide d'un soustracteur 49, entre un seuil de tension minimum Vₘᵢₙ, par exemple 100V, et la tension V_{c} fournie par les moyens de mesure 28. Un amplificateur 50 applique un gain K à la tension V_{Rmin} délivrée par le soustracteur 49. Puis, un limiteur 51 applique des bornes de saturation pour obtenir la valeur du courant I_{b} à laquelle il faut réguler le courant I_{c} du condensateur 19 pour obtenir la tension V_{Rmin} au niveau du condensateur 19. Au niveau d'un comparateur 53, on compare alors la valeur de courant I_{b} obtenue en sortie du limiteur 51 avec la valeur de courant I_{ref} issue de la deuxième boucle de courant 33. Le comparateur 53 délivre une valeur de courant I_{ref}" correspondant à la valeur maximale entre ces deux valeurs.

Dans la deuxième unité Bₘₐₓ, on fait la différence, à l'aide d'un soustracteur 55, entre un seuil de tension maximum Vₘₐₓ, par exemple 600V, et la tension V_{c} fournie par les moyens de mesure 28. Un amplificateur 56 amplifie la valeur de tension V_{Rmax} délivrée par le soustracteur 55. Puis, un limiteur 57 applique des bornes de saturation pour obtenir la valeur de courant I_{b}' à laquelle il faut réguler le courant I_{c} du condensateur 19 pour obtenir la tension V_{Rmax} au niveau du condensateur 19. Au niveau d'un comparateur 59, on compare alors la valeur du courant I_{b}' issue du limiteur 57 avec la valeur du courant I_{ref}" issue du comparateur 53 de la première unité Bₘᵢₙ. Le comparateur 59 garde la valeur minimale pour obtenir le premier courant I_{ref} de référence qui est alors transmis au module de commande 29 de la première boucle de courant 27 présentée sur la figure 5a.

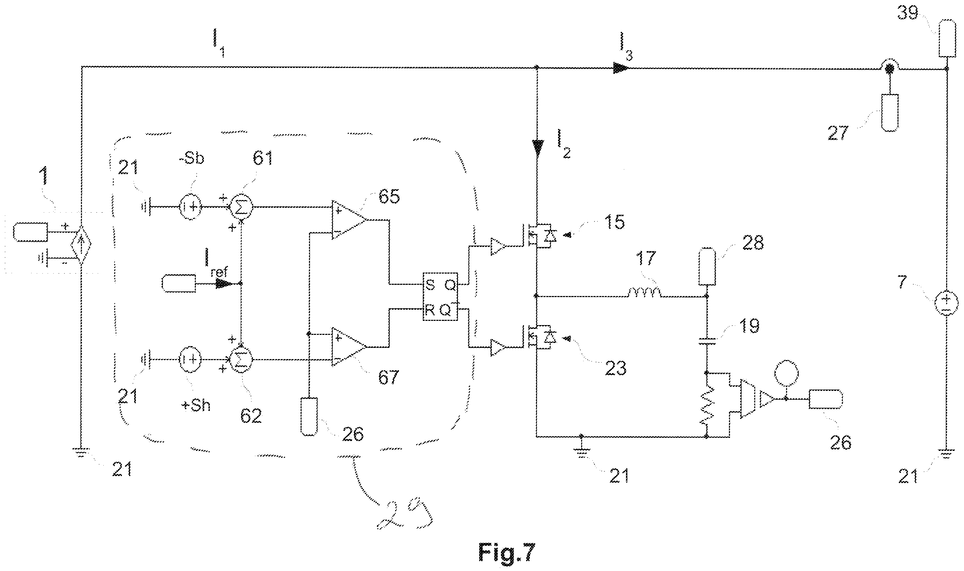

L'ouverture et la fermeture des interrupteurs du circuit d'absorption 9, 10 sont alors pilotées pour que le courant I_{c} du condensateur 19 corresponde à la première valeur de courant I_{ref} de référence. La figure 7 représente un exemple de réalisation du module de commande 29 des interrupteurs du circuit 9, 10 en fonction de la consigne I_{ref} dans le cas d'une commande à hystérésis. Le courant I_{ref} obtenu à la sortie du comparateur 59 de la deuxième unité Bₘₐₓ est transmis vers un premier sommateur 61 pour définir un seuil bas I_{ref}-Sb, par exemple I_{ref}-4. Le courant I_{ref} est en outre transmis vers un deuxième sommateur 62 pour définir un seuil haut I_{ref}+Sh, par exemple I_{ref}+4. Le seuil bas est envoyé vers un premier comparateur 65 pour être comparé avec la valeur du courant I_{c} du condensateur 19 fourni par les moyens de mesure 26. La sortie du premier comparateur 65 vaut 1 lorsque la différence entre le seuil bas et le courant Ic du condensateur 19 est positive et vaut 0 sinon. Le seuil haut est envoyé vers un deuxième comparateur 67 pour être comparé avec la valeur du courant I_{c} du condensateur 19 fourni par les moyens de mesure 26. La sortie du deuxième comparateur 67 vaut 1 lorsque la différence entre le courant I_{c} du condensateur et le seuil haut est positive et vaut 0 sinon. L'introduction des seuils haut et bas permet de limiter la fréquence de commutation des interrupteurs du circuit d'absorption 9, 10. Les sorties du premier 65 et du deuxième 67 comparateurs sont envoyées respectivement vers les entrées S et R d'une bascule RS 69.

La sortie Q de la bascule RS est reliée à un interrupteur 15 du circuit d'absorption 9, 10 et commande la fermeture de l'interrupteur 15 lorsque la sortie Q est à 1. La sortie Q⁻ de la bascule RS est reliée à un autre interrupteur 23 du circuit d'absorption 9, 10 et commande la fermeture de l'interrupteur 23 lorsque la sortie Q⁻ est à 1. Le pilotage des interrupteurs 15, 23 permet donc d'asservir le courant I_{c} du condensateur 19 entre les valeurs I_{ref}-Sb et I_{ref}+Sh.

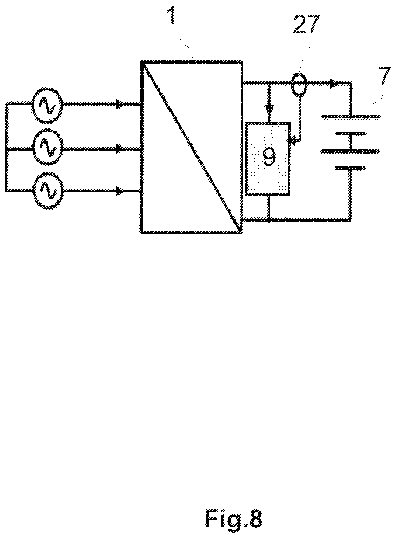

Le circuit d'absorption 9, 10 peut également être utilisé aux bornes d'un correcteur du facteur de puissance 1 branché sur un réseau triphasé comme représenté sur la figure 8. En effet, les réseaux triphasés ne sont pas toujours parfaitement équilibrés de sorte qu'il existe également une composante sinusoïdale à la sortie d'un correcteur du facteur de puissance 1 branché sur un réseau triphasé. Dans ce cas, l'utilisation d'un circuit d'absorption des ondulations de puissance 9, 10 permet également de supprimer la composante sinusoïdale. Si la batterie 7 supporte la tension délivrée en sortie du circuit d'absorption 9, 10, le chargeur peut alors être constitué seulement d'un correcteur du facteur de puissance 1 et d'un circuit d'absorption 9, 10 tel que décrit précédemment.

Les modes de réalisation de la présente invention peuvent être mis en oeuvre au niveau d'un correcteur du facteur de puissance réalisé par un onduleur de tension relié d'une part aux phases d'un moteur triphasé 72 et d'autre part à des moyens d'accumulation comme par exemple une batterie. L'onduleur de tension est par exemple tel que ceux décrit dans les demandes de brevet français FR2938711 et FR2944391 de la demanderesse.

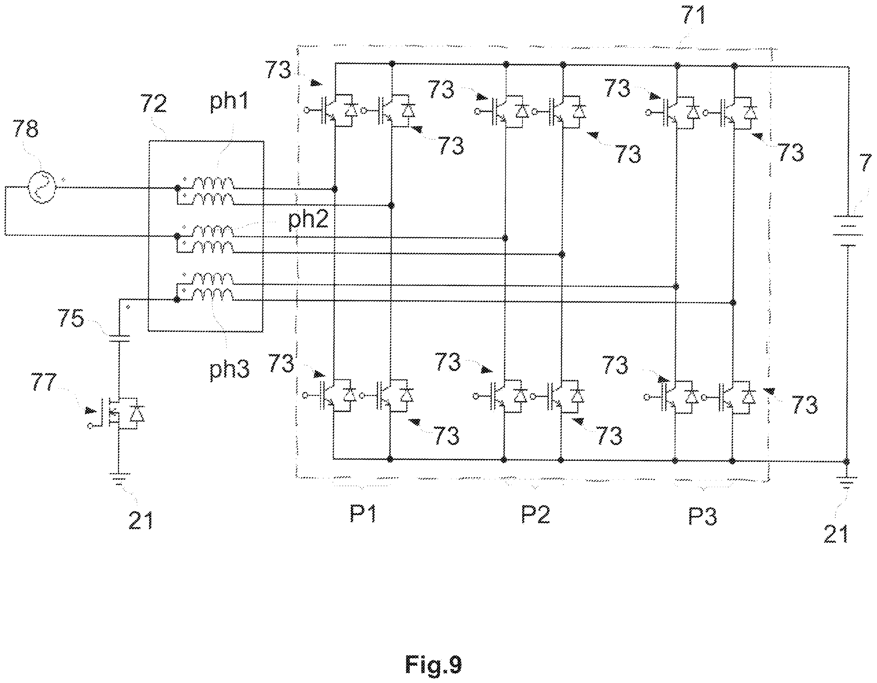

La figure 9 représente un exemple de schéma du circuit électrique de chargement de la batterie 7 dans le cas d'un onduleur à pont en H 71 comprenant trois ponts en H notés P1, P2 et P3, chaque pont P1, P2 et P3 comprenant deux branches de deux moyens de commutation, par exemple des interrupteurs 73, les points milieux des branches étant reliés aux phases ph1, ph2 et ph3 du moteur 72 et les extrémités des branches étant reliées à la batterie 7. Afin de recharger la batterie 7 sur un réseau monophasé 78, on branche les points milieux de deux des phases du moteur, par exemple ph1 et ph2 sur le réseau et on branche un condensateur 77 sur le point milieu de la troisième phase ph3. Le condensateur 77 est également relié à la masse 21 via un interrupteur 77 qui est en position fermé lors du chargement de la batterie 7 et en position ouverte sinon. La troisième phase ph3 en série avec le condensateur 75 et les interrupteurs 73 d'une branche du pont en H P3 alimentant la troisième phase ph3 constituent alors le circuit d'absorption d'une ondulation de la puissance délivrée par les deux autres phases de l'onduleur 71. En pilotant les interrupteurs 73 du circuit d'adaptation 9 ainsi formé comme décrit dans les modes de réalisation précédents, on absorbe la partie sinusoïdale du courant délivré par l'onduleur 71 à la batterie 7, ce qui permet de délivrer un courant continu à la batterie 7 et donc une puissance continue.

Ainsi, le circuit d'absorption permet d'asservir, par le pilotage des interrupteurs, la valeur du courant I_{c} traversant le condensateur 19 de manière à ce que le courant I₂ absorbé par le circuit d'absorption 9, 10 corresponde à la partie sinusoïdale du courant I₁ délivré par le correcteur du facteur de puissance 1. Le courant I₃ résultant correspond alors à la valeur continue du courant I₁. La valeur de capacité du condensateur 19 nécessaire dans le circuit d'absorption 9, 10 est très inférieure aux valeurs de capacité nécessaires pour absorber la partie sinusoïdale du courant I₁ en l'absence d'un tel circuit 9, 10. Les valeurs de capacité du condensateur 19 étant relativement faibles, de l'ordre d'une centaine de µF, des condensateurs de type film peuvent être utilisés.

De plus comme expliqué précédemment, l'asservissement peut prendre en compte la valeur de la tension V_{c} aux bornes du condensateur 19 de manière à maintenir la valeur de la tension V_{c} aux bornes du condensateur 19 à l'intérieur d'un intervalle prédéfini. Enfin, il est à noter que le circuit d'absorption 9, 10 peut être utilisé en sortie d'un correcteur de facteur de puissance alimenté par un réseau électrique monophasé ou triphasé.

Le circuit en figure 6 permet de réguler la tension V_{c} du condensateur 19 à une valeur acceptable, par exemple la moitié V_{bat}/2 de la tension V_{bat} de la batterie. En particulier, on peut réguler la composante continue de la tension V_{c} aux bornes du condensateur 19 à la moitié V_{bat}/2 de la tension V_{bat} de la batterie, notamment grâce au filtre passe-bas 43 de l'unité 34 pour asservir la seconde valeur de référence Iₐ. Le filtre passe-bas 43 peut délivrer en sortie la composante continue de la consigne Iₐ.

Cependant, la régulation à la moitié V_{bat}/2 de la tension V_{bat} de la batterie est un exemple. La régulation de la tension V_{c} aux bornes du condensateur 19, en particulier de la composante continue de cette tension V_{c}, peut être réalisée avec toute valeur garantissant que la tension V_{c} reste dans un intervalle prédéfini. Ainsi, on s'assure que l'excursion de la tension V_{c} du condensateur ne dérive pas au cours du fonctionnement du circuit d'absorption 9, 10.

En outre, le circuit en figure 6 peut permettre de réguler la tension V_{c} du condensateur 19 de manière à ce que la tension V_{c} aux bornes du condensateur 19 reste dans un intervalle prédéfini 3 grâce aux unités Bmin , Bmax de limitation. En particulier, l'unité Bmax est configurée pour limiter le courant Ic parcourant le condensateur 19 de sorte que la tension Vc aux bornes du condensateur 19 reste inférieure au égale à une valeur maximale Vmax. L'unité Bmin de limitation est notamment configurée pour limiter le courant Ic parcourant le condensateur 19 de sorte que la tension Vc aux bornes du condensateur 19 reste supérieure ou égale à une valeur minimale Vmin.

## Revendications

1. Circuit (9, 10) d'absorption d'une ondulation de puissance destiné à être connecté en parallèle d'un équipement électrique alimenté par un circuit de correction du facteur de puissance (1), ledit circuit d'absorption (9, 10) étant de type abaisseur de tension et comprenant :
- un condensateur (19) monté en série avec une inductance (17) et au moins un interrupteur (15, 23),
- un module de contrôle (25),
- des moyens de mesure (27) d'un premier courant (I₃) destiné à alimenter ledit équipement électrique
l'interrupteur (15, 23) étant piloté par le module de contrôle (25) pour faire varier la charge du condensateur en fonction de l'ondulation du premier courant (I₃) afin d'atténuer l'ondulation de puissance, et
ledit circuit comprenant en outre des moyens de mesure (28) de la tension (V_{c}) aux bornes du condensateur (19), et le module de contrôle (25) étant configuré pour asservir un second courant (I_{c}) traversant le condensateur (19) de manière à ce que la tension (V_{c}) aux bornes du condensateur (19) reste dans un intervalle prédéfini,
**caractérisé en ce que**
le module de contrôle (25) comprend au moins une unité (Bmin, Bmax) de limitation configurée pour limiter le courant (I_{c}) parcourant le condensateur (19) de sorte que la tension (V_{c}) aux bornes du condensateur (19) reste inférieure au égale à une valeur maximale (Vmax) et/ou supérieure ou égale à une valeur minimale (Vmin).

2. Circuit d'absorption (9, 10) selon la revendication 1, dans lequel le module de contrôle (25) comprend une boucle d'asservissement du courant (I_{c}) traversant le condensateur (19) configurée pour recevoir une consigne de courant (Iₐ), ladite consigne (Iₐ) étant déterminée en fonction de la différence entre la tension (V_{c}) aux bornes du condensateur (19) et une valeur donnée de tension de façon à réguler la composante continue de la tension (V_{c}) du condensateur (19) à ladite valeur.

3. Circuit d'absorption (9, 10) selon la revendication 1 ou 2, dans lequel le module de contrôle (25) comprend :
- une première boucle d'asservissement (27) configurée pour asservir la valeur du second courant (I_{c}) traversant le condensateur (19) à une première valeur de référence (I_{ref}), et
- une deuxième boucle d'asservissement (33) configurée pour asservir la première valeur de référence (I_{ref}) en fonction du premier courant (I₃) alimentant ledit équipement électrique.

4. Circuit d'absorption (9, 10) selon la revendication 3 dans lequel la deuxième boucle d'asservissement (33) comprend un filtre passe-bande (35) afin de filtrer la composante continue et les fréquences liées au bruit dans le premier courant (I₃) alimentant ledit équipement électrique.

5. Circuit d'absorption (9, 10) selon les revendications 2 et 4, dans lequel la deuxième boucle d'asservissement (33) comprend en outre des moyens pour soustraire la sortie du filtre passe-bande (35) à la consigne (Iₐ) pour établir la première valeur de référence (I_{ref}).

6. Circuit d'absorption (9) selon l'une des revendications 1 à 5 comprenant une branche ayant au moins un interrupteur (15, 23) piloté par le module de contrôle (25) et connecté à une extrémité du condensateur (19) et de l'inductance (17) montés en série.

7. Circuit d'absorption (10) selon l'une des revendications 1 à 6 comprenant deux branches connectées de part et d'autre du condensateur (19) et de l'inductance montés en série,
lesdites deux branches comprenant des interrupteurs (15, 15', 23, 23') connectés en série et étant destinées à être montées en parallèle de l'équipement électrique,
les interrupteurs (15, 15', 23, 23') étant pilotés par le module de contrôle (25)) pour faire varier la charge du condensateur (19) en fonction de l'ondulation du premier courant (I₃) afin d'atténuer l'ondulation de puissance.

8. Convertisseur de tension alternative en tension continue destiné à alimenter un équipement électrique (7) comprenant un circuit de correction du facteur de puissance (1) connecté à un circuit d'absorption (9, 10) selon l'une des revendications 1 à 7.

9. Convertisseur de tension selon la revendication 8 dans lequel le circuit de correction du facteur de puissance (1) est réalisé par un onduleur (71)
ledit onduleur (71) comprenant des bobines constituant des phases (ph1, ph2, ph3) d'un moteur électrique (72),
ledit onduleur (71) comprenant en outre des moyens de commutation (73) associés à chacune desdites phases (ph1, ph2, ph3),
dans lequel, lors de l'alimentation de l'équipement électrique (7) à partir d'un réseau électrique monophasé,
une première (ph1) et une deuxième (ph2) phases du moteur électrique (72) sont destinées à être connectées au réseau électrique,
une troisième phase (ph3) du moteur électrique (72) et les moyens de commutation (73) associés à la troisième phase (ph3) constituant respectivement l'inductance (17) et l'interrupteur du circuit d'absorption (9, 10), lesdits moyens de commutation (73) étant pilotés par le module de contrôle (25) du circuit d'absorption (9, 10) pour faire varier la charge du condensateur (19, 75) en fonction de l'ondulation du premier courant (I₃) afin d'atténuer l'ondulation de puissance.

10. Utilisation d'un convertisseur de tension selon la revendication 8 ou 9 en tant que chargeur de moyens d'accumulation (7).

11. Procédé d'absorption d'une ondulation de puissance délivrée par un circuit de correction du facteur de puissance (1) à un équipement électrique, le procédé comprenant :
- la connexion d'un circuit comprenant un condensateur (19) monté en série avec une inductance (17) et au moins un interrupteur (15, 15', 23, 23') en parallèle de l'équipement électrique,
- la mesure d'un premier courant (I₃) délivré audit équipement électrique par le circuit de correction du facteur de puissance (1),
- le pilotage de l'interrupteur (15, 15', 23, 23') pour faire varier la charge du condensateur (19) en fonction de l'ondulation du premier courant (I₃) afin d'atténuer l'ondulation de puissance,
- la mesure de la tension (V_{c}) aux bornes du condensateur (19), et l'asservissement d'un second courant (I_{c}) traversant le condensateur (19) de manière à ce que la tension (V_{c}) aux bornes du condensateur (19) reste dans un intervalle prédéfini,
**caractérisé par** la limitation du courant (I_{c}) parcourant le condensateur (19) de sorte que la tension (V_{c}) aux bornes du condensateur (19) reste inférieure ou égale à une valeur maximale (Vmax) et/ou supérieure ou égale à une valeur minimale (Vmin).

12. Procédé selon la revendication 11 comprenant :
- la détermination d'une consigne de courant (Iₐ) en fonction de la différence entre la tension (V_{c}) aux bornes du condensateur (19) et une valeur donnée de tension,
- l'asservissement du courant (I_{c}) traversant le condensateur (19) de tension, comprenant la réception de ladite consigne (la), de façon à réguler la composante continue de la tension (Vc) du condensateur (19) à ladite valeur.

13. Procédé selon l'une des revendications 11 à 12, comprenant :
- la mesure du second courant (I_{c}) traversant le condensateur (19)
- un premier asservissement de la valeur du second courant (I_{c}) traversant le condensateur (19) à une première valeur de référence (I_{ref}), et
- un second asservissement de la première valeur de référence (I_{ref}) en fonction du premier courant (I₃) alimentant ledit équipement électrique.

14. Procédé selon la revendication 13, dans lequel le deuxième asservissement comprend un filtrage par un filtre passe-bande (35) de la composante continue et des fréquences liées au bruit dans le premier courant (I₃) alimentant ledit équipement électrique.

15. Procédé selon les revendications 12 et 14, dans lequel le second asservissement comprend en outre la soustraction de la sortie du filtre passe-bande (35) à la consigne (Iₐ) pour établir la première valeur de référence (I_{ref}).

16. Procédé selon l'une des revendications 11 à 15 dans lequel le circuit de correction du facteur de puissance (1) est branché en entrée sur un réseau d'alimentation triphasé.

17. Procédé selon l'une des revendications 11 à 15 dans lequel le circuit de correction du facteur de puissance (1) est branché en entrée sur un réseau d'alimentation monophasé.

18. Procédé selon l'une des revendications 11 à 17 dans lequel l'équipement électrique consiste en des moyens d'accumulation (7).

## Patentansprüche

1. Absorptionsschaltung (9, 10) zur Absorption einer Stromwelle, die parallel zu einem elektrischen Gerät geschaltet werden soll, das von einer Leistungsfaktorkorrekturschaltung (1) gespeist wird, wobei die genannte Absorptionsschaltung (9, 10) vom Typ Spannungsabwärtswandler ist und Folgendes umfasst:
- einen Kondensator (19), der mit einer Induktanz (17) und mindestens einem Schalter (15, 23) in Reihe geschaltet ist,
- ein Steuermodul (25),
- Messmittel (27) zum Messen eines ersten Stroms (I3), der das genannte elektrische Gerät versorgen soll,
wobei der Schalter (15, 23) von einem Steuermodul (25) gesteuert wird, um die Ladung des Kondensators in Abhängigkeit von der Welligkeit des ersten Stroms (I3) zu variieren, um die Stromwelle zu dämpfen, und
wobei die genannte Schaltung darüber hinaus Messmittel (28) für die Spannung (Vc) an den Anschlüssen des Kondensators (19) umfasst und das Steuermodul (25) für die Regelung eines zweiten Stroms (Ic), der durch den Kondensator (19) fließt, so konfiguriert ist, dass die Spannung (Vc) an den Anschlüssen des Kondensators (19) in einem vordefinierten Intervall bleibt, **dadurch gekennzeichnet, dass** das Steuermodul (25) mindestens eine Begrenzungseinheit (Bmin, Bmax) umfasst, die so konfiguriert ist, dass sie den Strom (Ic) begrenzt, der durch den Kondensator fließt (19), so dass die Spannung (Vc) an den Anschlüssen des Kondensators (19) kleiner oder gleich einem Höchstwert (Vmax) bleibt und/oder größer oder gleich einem Mindestwert (Vmin) bleibt.

2. Absorptionsschaltung (9, 10) nach Anspruch 1, in der das Steuermodul (25) einen Regelkreis für den Kondensator (19) durchfließenden Strom (Ic) umfasst, der so konfiguriert ist, dass er einen Strom-Vorgabewert (la) erhält, wobei der genannte Vorgabewert (la) in Abhängigkeit von der Differenz zwischen der Spannung (Vc) an den Anschlüssen des Kondensators (19) und einem gegebenen Spannungswert so bestimmt wird, dass die Gleichspannungskomponente der Spannung (Vc) des Kondensators (19) im Hinblick auf diesen Wert reguliert wird.

3. Absorptionsschaltung (9, 10) nach Anspruch 1 oder 2, in der das Steuermodul (25) Folgendes umfasst:
- einen ersten Regelkreis (27), der konfiguriert ist, um den Wert des zweiten Stroms (Ic), der durch den Kondensator (19) fließt, im Hinblick auf einen ersten Referenzwert (Iref) zu regeln, und
- einen zweiten Regelkreis (33), der konfiguriert ist, um den ersten Referenzwert (Iref) in Abhängigkeit von dem ersten Strom (I3) zu regeln, der das genannte elektrische Gerät versorgt.

4. Absorptionsschaltung (9, 10) nach Anspruch 3, in der der zweite Regelkreis (33), einen Bandpass (35) umfasst, um die Gleichspannungskomponente und die Frequenzen im Zusammenhang mit dem Rauschen im ersten Strom (I3), der das genannte elektrische Gerät versorgt, zu filtern.

5. Absorptionsschaltung (9, 10) nach den Ansprüche 2 und 4, in der der zweite Regelkreis (33) darüber hinaus Mittel umfasst, um den Ausgang des Bandpasses (35) vom Vorgabewert (la) abzuziehen, um den ersten Referenzwert (Iref) zu ermitteln.

6. Absorptionsschaltung (9) nach einem der Ansprüche 1 bis 5, die einen Schaltungszweig umfasst, der mindestens einen Schalter (15, 23) aufweist, der durch das Steuermodul (25) gesteuert wird und an einem Ende des Kondensators (19) und der Induktanz (17), die in Reihe geschaltet sind, angeschlossen ist.

7. Absorptionsschaltung (9, 10) nach einem der Ansprüche 1 bis 6, die zwei Schaltungszweige umfasst, die beiderseitig an den Kondensator (19) und die Induktanz, die in Reihe geschaltet sind, angeschlossen sind,
- wobei die beiden Schaltungszweige in Reihe geschaltete Schalter (15, 15', 23, 23') umfassen, die parallel zum elektrischen Gerät geschaltet werden sollen,
- wobei die Schalter (15, 15', 23, 23') vom Steuermodul (25) gesteuert werden, um die Ladung des Kondensators (19) in Abhängigkeit der Welligkeit des ersten Stroms (I3) zu variieren, um die Stromwelle zu dämpfen.

8. Wechselspannungs- zu Gleichspannungswandler, der dazu gedacht ist, ein elektrisches Gerät (7) zu versorgen, eine Leistungsfaktorkorrekturschaltung (1) umfassend, die an eine Absorptionsschaltung (9, 10) nach einem der Ansprüche 1 bis 7 angeschlossen ist.

9. Spannungswandler nach Anspruch 8, in dem die Leistungsfaktorkorrekturschaltung (1) durch einen Wechselrichter (71) realisiert wird,
- wobei der genannte Wechselrichter (71) Spulen umfasst, die die Phasen (ph1, ph2, ph3) eines Elektromotors (72) bilden,
- wobei der genannte Wechselrichter (71) darüber hinaus Schaltmittel (73) für jede der genannten Phasen (ph1, ph2, ph3) umfasst,
- in dem bei einer Versorgung des elektrischen Geräts (7) über ein einphasiges Stromnetz,
- eine erste (ph1) und eine zweite (ph2) Phase des Elektromotors (72) an das Stromnetz angeschlossen werden sollen,
- eine dritte Phase (ph3) des Elektromotors (72) und die Schaltmittel (73), die der dritten Phase (ph3) zugeordnet sind, jeweils die Induktanz (17) und den Schalter der Absorptionsschaltung (9, 10) darstellen, wobei diese Schaltmittel (73) durch das Steuermodul (25) der Absorptionsschaltung (9, 10) gesteuert werden, um die Ladung des Kondensators (19, 75) in Abhängigkeit der Welligkeit des ersten Stroms (I3) zu variieren, um die Stromwelle zu dämpfen.

10. Nutzung eines Spannungswandlers nach Anspruch 8 oder 9 als Ladevorrichtung für Speichereinrichtungen (7).

11. Verfahren zur Absorption einer Stromwelle, die von einer Leistungsfaktorkorrekturschaltung (1) an ein elektrisches Element weitergegeben wird, wobei das Verfahren Folgendes umfasst:
- den Anschluss einer Schaltung, die einen Kondensator (19), der mit einer Induktanz (17) in Reihe geschaltet ist, und mindestens einen Schalter (15, 15', 23, 23'), der mit dem elektrischen Gerät parallel geschaltet ist, umfasst.
- das Messen eines ersten Stroms (I3), der von der Leistungsfaktorkorrekturschaltung (1) an das elektrisches Gerät geliefert wird,
- die Steuerung des Schalters (15, 15', 23, 23'), um die Ladung des Kondensators (19) in Abhängigkeit von der Welligkeit des ersten Stroms (I3) zu variieren, um die Stromwelle zu dämpfen,
- das Messen der Spannung (Vc) an den Anschlüssen des Kondensators (19) und die Regelung eines zweiten Stroms (Ic), der durch den Kondensator (19) fließt, so dass die Spannung (Vc) an den Anschlüssen des Kondensators (19) in einem vordefinierten Intervall bleibt,
**gekennzeichnet durch**
- die Begrenzung des Stroms (Ic), der durch den Kondensator (19) fließt, so dass die Spannung (Vc) an den Anschlüssen des Kondensators (19) kleiner oder gleich einem Höchstwert (Vmax) bleibt und/oder größer oder gleich einem Mindestwert (Vmin) bleibt.

12. Verfahren nach Anspruch 11, das Folgendes umfasst:
- die Bestimmung eines Vorgabewerts des Stroms (la) in Abhängigkeit von der Differenz zwischen der Spannung (Vc) an den Anschlüssen des Kondensators (19) und einem gegebenen Spannungswert,
- die Regelung des Stroms (Ic), der durch den Spannungskondensator (19) fließt, die den Empfang des genannten Vorgabewerts (la) umfasst, so dass die Gleichspannungskomponente der Spannung (Vc) des Kondensators (19) im Hinblick auf den genannten Wert reguliert wird.

13. Verfahren nach den Ansprüchen 11 bis 12, das Folgendes umfasst:
- die Messung des zweiten Stroms (Ic), der durch den Kondensator (19) fließt
- eine erste Regelung des Wertes des zweiten Stroms (Ic), der durch den Kondensator (19) fließt, im Hinblick auf den ersten Referenzwert (Iref), und,
- eine zweite Regelung des ersten Referenzwerts (Iref) in Abhängigkeit vom ersten Strom (I3), der das genannte elektrische Gerät versorgt.

14. Verfahren nach Anspruch 13, in dem die zweite Regelung ein Filtern der Gleichspannungskomponente und der Frequenzen im Zusammenhang mit dem Rauschen im ersten, das elektrische Gerät versorgenden Stroms (I3) durch einen Bandpass (35) umfasst.

15. Verfahren nach den Ansprüchen 12 und 14, in dem die zweite Regelung darüber hinaus die Subtraktion des Ausgangs des Bandpasses (35) vom Vorgabewert (I3) umfasst, um den ersten Referenzwert (Iref) zu ermitteln.

16. Verfahren nach einem der Ansprüche 11 bis 15, in dem der Eingang der Leistungsfaktorkorrekturschaltung (1) mit einem dreiphasigen Stromnetz verbunden ist.

17. Verfahren nach einem der Ansprüche 11 bis 15, in dem der Eingang der Leistungsfaktorkorrekturschaltung (1) mit einem einphasigen Stromnetz verbunden ist.

18. Verfahren nach einem der Ansprüche 11 bis 17, in dem das elektrische Gerät aus Speichereinrichtungen (7) besteht.

## Claims

1. Circuit (9, 10) for absorbing a power ripple intended to be connected in parallel to an electric equipment supplied by a power factor correction circuit (1), said absorption circuit (9, 10) being a voltage reduction type and comprising
- a capacitor (19) assembled in series with an inductance (17) and at least one switch (15, 23),
- a control module (25),
- means for measuring (27) a first current (I₃) intended to supply said electrical equipment
the switch (15, 23) being controlled by the control module (25) to make the load of the capacitor vary according to the ripple of the first current (I₃) in order to diminish the power ripple, and
said circuit further comprising means for measuring (28) the voltage (V_{C}) in the terminals of the capacitor (19), and the control module (25) being configured to control a second current (I_{C}) crossing the capacitor (19) so that the voltage (V_{C}) in the terminals of the capacitor (19) remains in a predefined interval, **characterised in that** the control module (25) comprises at least one limitation unit (Bₘᵢₙ, Bₘₐₓ) configured to limit the current (I_{C}) crossing the capacitor (19) so that the voltage (V_{C}) in the terminals of the capacitor (19) remains less than or equal to a maximum value (Vₘₐₓ) and/or more than or equal to a minimum value (Vₘᵢₙ).

2. Absorption circuit (9, 10) according to claim 1, wherein the control module (25) comprises a current (I_{C}) control loop crossing the capacitor (19) configured to receive a current set point (Iₐ), said set point (Iₐ) being determined according to the different between the voltage (V_{C}) in the terminals of the capacitor (19) and a given value of voltage, in a way to regulate the DC component of the voltage (V_{C}) of the capacitor (19) to said value.

3. Absorption circuit (9, 10) according to claim 1 or 2, wherein the control module (25) comprises:
- a first control loop (27) configured to control the value of the second current (I_{C}) crossing the capacitor (19) to a first reference value (I_{ref}), and
- a second control loop (33) configured to control the first reference value (I_{ref}) according to the first current (I₃) supplying said electrical equipment.

4. Absorption circuit (9, 10) according to claim 3, wherein the second control loop (33) comprises a bandpass filter (35) in order to filter the DC component and the frequencies connected to the sound in the first current (I₃) supplying said electrical equipment.

5. Absorption circuit (9, 10) according to claims 2 and 4, wherein the second control loop (33) further comprises means for removing the output of the bandpass filter (35) to the set point (Iₐ) to establish the first reference value (I_{ref}).

6. Absorption circuit (9) according to one of the claims 1 to 5, comprising a connection that has at least one switch (15, 23) controlled by the control module (25) and connected to an end of the capacitor (19) and the inductance (17) assembled in series.

7. Absorption circuit (10) according to one of the claims 1 to 6 comprising two connections connected on both sides of the capacitor (19) and the inductance assembled in series,
said two connections comprising switches (15, 15', 23, 23') connected in series and being intended to be assembled in parallel from the electrical equipment,
the switches (15,15', 23, 23') being controlled by the control module (25) to make the load of the capacitor (19) vary according to the ripple of the first current (I₃) in order to diminish the power ripple.

8. AC to DC voltage converter intended to supply an electrical equipment (7) comprising a power factor correction circuit (1) connected to an absorption circuit (9, 10) according to one of the claims 1 to 7.

9. Voltage converter according to claim 8, wherein the power factor correction circuit (1) is produced by a converter (71)
said converter (71) comprising bobbins constituting phases (ph1, ph2, ph3) of an electric motor (72),
said converter (71) further comprising switching means (73) associated with each one of said phases (ph1, ph2, ph3),
wherein, during the supply of the electrical equipment (7) from a single-phase electrical network,
a first (ph1) and a second (ph2) phase of the electric motor (72) are intended to be connected to the electrical network,
a third phase (ph3) of the electric motor (72) and switching means (73) associated with the third phase (ph3) respectively constituting the inductance (17) and the switch of the absorption circuit (9, 10), said switching means (73) being controlled by the control module (25) of the absorption circuit (9, 10) to make the load of the capacitor (19, 75) vary according to the ripple of the first current (I₃) in order to diminish the power ripple.

10. Use of a voltage converter according to claim 8 or 9 as a loader of accumulation means (7).

11. Method for absorbing a power ripple delivered by a power factor correction circuit (1) to an electrical equipment, the method comprising:
- the connection of a circuit comprising a capacitor (19) assembled in series with an inductance (17) and at least one switch (15, 15', 23, 23') in parallel from the electrical equipment,
- the measurement of a first current (I₃) delivered to said electrical equipment by the power factor correction circuit (1),
- the controlling of the switch (15, 15', 23, 23') to make the load of the capacitor (19) vary according to the ripple of the first current (I₃) in order to diminish the power ripple,
- the measurement of the voltage (V_{C}) to the terminals of the capacitor (19), and the control of a second current (I_{C}) crossing the capacitor (19) so that the voltage (Vc) to the terminals of the capacitor (19) remains in a predefined interval,
- **characterized by** the limitation of the current (I_{C}) crossing the capacitor (19) so that the voltage (V_{C}) to the terminals of the capacitor (19) remains less than or equal to a maximum value (Vₘₐₓ) and/or more than or equal to a minimum value (Vₘᵢₙ).

12. Method according to claim 11 comprising:
- the determination of a current (Iₐ) set point according to the difference between the voltage (V_{C}) to the terminals of the capacitor (19) and a given value of voltage,
- the control of the current (I_{C}) crossing the voltage capacitor (19), comprising the reception of said set point (Ia), so as to regulate the DC component of the voltage (V_{C}) of the capacitor (19) to said value.

13. Method according to claim 11 or 12, comprising:
- the measurement of the second current (I_{C}) crossing the capacitor (19)
- a first control of the value of the second current (I_{C}) crossing the capacitor (19) to a first reference value (I_{ref}), and
- a second control of the first reference value (I_{ref}) according to the first current (I₃) supplying said electrical equipment.

14. Method according to claim 13, wherein the second control comprises a filtering by a bandpass filter (35) of the DC component and the frequencies connected to the sound in the first current (I₃) supplying said electrical equipment.

15. Method according to claims 12 and 14, wherein the second control further comprises the removal of the output of the bandpass filter (35) to the set point (Iₐ) to establish the first reference value (I_{ref}).

16. Method according to one of the claims 11 to 15, wherein the power factor correction circuit (1) is connected to the input on a three-phase supply network.

17. Method according to one of the claims 11 to 15, wherein the power factor correction circuit (1) is connected to the input on a single-phase supply network.

18. Method according to one of the claims 11 to 17, wherein the electrical equipment consists of accumulation means (7).
